# NEUE EUROPÄISCHE PATENTSCHRIFT

(11) **EP 0 974 843 B2**
(45) Veröffentlichungstag und Bekanntmachung des Hinweises auf die Entscheidung über den Einspruch: **19.06.2013**
(45) Hinweis auf die Patenterteilung: 08.06.2005
(21) Anmeldenummer: 99113500.5
(22) Anmeldetag: 13.07.1999
(51) Int. Cl.: G01P 13/04, G01P 3/486, H01H 25/06, G01D 5/25

(54) **Drehgeber**
Rotary encoder
Codeur tournant

(30) Priorität: 21.07.1998 DE 19832678
(43) Veröffentlichungstag der Anmeldung: 26.01.2000
(73) Patentinhaber: Continental Automotive GmbH, 30165 Hannover (DE)
(72) Erfinder: Bender, Klaus-W., 35516 Münzenberg (DE); Müller, Elke, 35633 Lahnau (DE)

(56) Entgegenhaltungen:
- EP-A- 0 717 424
- WO-A1-98/15963
- DE-A- 3 015 971
- US-A- 5 373 142
- US-A- 5 373 142
- PATENT ABSTRACTS OF JAPAN vol. 199, no. 707, 31. Juli 1997 (1997-07-31) & JP 09 062345 A (SONY TEKTRONIX CORP), 7. März 1997 (1997-03-07)

## Beschreibung

Die Erfindung betrifft eine Schaltungsanordnung mit einem Drehgeber, bei dem durch Drehen einer Handhabe um eine Drehachse mindestens eine von Drehgeschwindigkeit und Drehrichtung abhängige Impulsfolge erzeugbar ist.

Aus dem Stand der Technik sind Schaltungsanordnungen mit einem Drehgeber bekannt, bei denen durch Drehen des Drehgebers um eine Drehachse Impulsfolgen in Abhängigkeit der Drehrichtung und Drehgeschwindigkeit erzeugbar sind. Zusätzliche Funktionen sind hierbei entweder durch zusätzliche Bauteile, die von dem Drehgeber entfernt angeordnet sind oder durch aufwendig gestaltete Drehgeber realisiert.

Aus der US-A-5 373 142 ist eine Schaltungsanordnung mit einem Drehgeber, welcher einen Rotor mit einer Handhabe aufweist, bei dem durch Drehen der Handhabe um eine Drehachse mindestens eine von Drehgeschwindigkeit und Drehrichtung abhängige Impulsfolge erzeugbar ist, wobei der Rotor einen Bauraum begrenzt, in dem zusätzliche Bauteile montiert sind, wobei als ein zusätzliches Bauteil ein Druckschalter mit Schaltelement und Handhabe vorhanden ist, der in axialer Richtung der Drehachse betätigbar ist und wobei das Schaltelement des Druckschalters auf einer Leiterplatte angeordnet ist und die Handhabe des Druckschalters von einer Beleuchtungsvorrichtung beleuchtbar ist, bekannt. Hierbei ist die Handhabe des Druckschalters über eine Beleuchtungsvorrichtung beleuchtbar, die in einer Betätigungsvorrichtung für den Druckschalter angeordnet ist.

Aufgabe der Erfindung ist es demgegenüber, eine Schaltungsanordnung mit einem Drehgeber anzugeben, bei dem zusätzliche Bauteile für zusätzliche Funktionen vorhanden sind, wobei die Schaltungsanordnung aber dennoch einfach und platzsparend aufgebaut ist.

Diese Aufgabe wird durch die Kenzeichnenden Merkmale des Anspruchs 1 gelöst.

Dadurch, daß die zusätzlichen Bauteile auf der Leiterplatte montiert sind, wird eine einfach und kompakt aufgebaut und einfach zu montierende Schaltungsanordnung erreicht.

Durch Ausbildung der Kontakte des Schaltelementes auf der Leiterplatte können die Kontakte gleichzeitig mit den Leiterbahnen der Leiterplatte hergestellt werden.

Durch die Anordnung der Beleuchtungsvorrichtung auf der Leiterplatte innerhalb des Drehgebers ist der Drehgeber einfach beleuchtbar.

Wenn die Handhabe des Druckschalters derart ausgebildet ist, daß sie nicht drehbar ist, behält eine Beschriftung der Handhabe oder ein Piktogramm immer seine ursprüngliche Lage und ist damit besser erkennbar.

Durch die Beschriftung der Handhabe des Druckschalters läßt sich die Funktion des Schalters für den Bediener optisch erkennen.

Optische Impulse haben den Vorteil, daß sie nicht durch elektromagnetische Störungen beeinträchtigt werden und ebensolche auch nicht verursachen.

Die Unterbrechungen von Lichtstrahlen durch den Rotor stellen eine einfach aufgebaute mechanische Realisation des Impulsgebers dar.

Wenn der Rotor in radialem Abstand von der Drehachse Ausnehmungen und dazwischenliegende Zähne aufweist, und das Licht einer Lichtquelle durch die Ausnehmungen auf eine Lichtsenke gelangen kann und durch die Zähne unterbrochen wird, ist der mechanische Aufbau des Rotors des Drehgebers besonders einfach zu realisieren, beispielsweise durch eine Kunststoffhülse, die an einem Ende die Zähne und Ausnehmungen aufweist.

Wenn der Rotor in radialem Abstand von der Drehachse reflektierende Bereiche aufweist, die von nicht reflektierenden Bereichen unterbrochen werden, sind sowohl die Lichtquelle als auch die Lichtsenke in größerer radialer Entfernung von der Drehachse entfernt plazierbar als der Rotor, so daß der Raum zwischen Rotor und Drehachse vollständig für die sonstigen Bauteile zur Verfügung steht und der Drehgeber besonders kleine Abmessungen aufweisen kann.

Eine Leuchtdiode als Lichtquelle ist einfach auf der Leiterplatte zu montieren, langlebig, benötigt wenig Bauraum und Energie und entwickelt entsprechend wenig Wärme.

Eine Fototransistor als Lichtsenke erfordert wenig Bauraum und ist preiswert.

Dadurch, daß die Handhabe des Schalters in den Träger einklipsbar ist, ist eine einfache und schnelle Montage des entsprechenden Bauteils möglich.

Dadurch, daß der Rotor des Drehgebers derart in den Träger einklipsbar ist, daß er in axialer Richtung festliegt und nur um die Drehachse gedreht werden kann, ist eine schnelle Montage und dauerhafte Befestigung des Rotors möglich.

Dadurch, daß der Drehgeber in Drehrichtung mehrere Raststellungen einnehmen kann, erhält der Bediener auch eine fühlbare Rückmeldung über den bereits zurückgelegten Drehwinkel des Drehgebers.

Diese Funktionsweise ist besonders einfach dadurch zu erreichen, daß der Rotor entlang seines Umfangs ein Rastprofil aufweist, wobei das Rastprofil besonders dauerhaft ist und beim Bediener ein angenehmes Rastgefühl erzeugt, wenn die Spitzen des Rastprofils abgerundet sind.

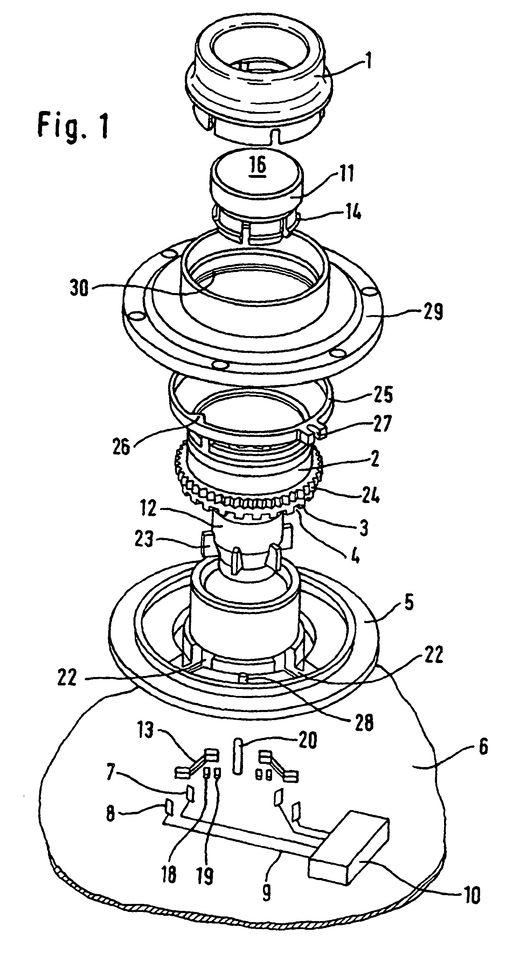

Die Erfindung läßt mehrere Ausgestaltungen zu. Nachfolgend wird die Erfindung anhand der Figuren für ein besonders bevorzugtes Ausführungsbeispiel näher erläutert. Es zeigen
- Figur 1: eine Explosionsansicht einer besonders bevorzugten Schaltungsanordnung auf einer Leiterplatte,
- Figur 2: einen Schnitt durch die zusammengebauten Teile aus Figur 1.

Der Rotor des Drehgebers besteht aus dem als Handhabe ausgestalteten Rotoroberteil 1 und dem Rotorunterteil 2. Die Form des Rotors entspricht im wesentlichen einem Rohr, an dem die zur Funktion des Drehgebers erforderlichen oder vorteilhaften Ausgestaltungen angefügt bzw. ausgestaltet sind.

An der Unterseite des Rotorunterteils 2 sind an dessen Umfang in gleichmäßigem Abstand die Zähne 3 angeordnet, zwischen denen sich Ausnehmungen 4 befinden. Der Rotor 1, 2 ist in einem Träger 5 um eine (imaginäre) Drehachse D drehbar gelagert. Der Träger 5 ist auf seiner Unterseite mit der Leiterplatte 6 verbunden. Zwei Fototransistoren 7 und zwei Leuchtdioden 8 sind auf der Leiterplatte 6 derart angeordnet, daß sie in zwei Ausnehmungen 22 des Trägers 5 ragen. Die Fototransistoren 7 sind in radialem Abstand von der Drehachse D angeordnet. In radialer Verlängerung ist jeweils eine der Leuchtdioden 8 derart angeordnet, daß je nach Stellung des Rotorunterteils 2 das Licht jeweils einer Leuchtdiode 8 durch die Ausnehmungen 4 des Rotors 1, 2 auf jeweils einen Fototransistor 7 fällt oder durch einen Zahn 3 des Rotorunterteils 2 unterbrochen wird.

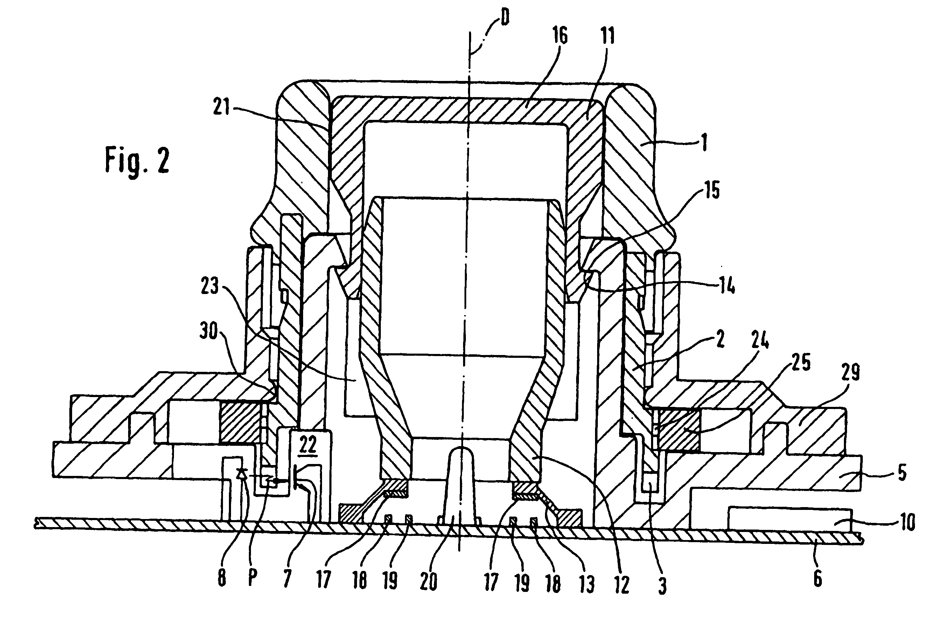

In Figur 2 ist der Lichtstrahl von der Leuchtdiode 8 auf den Fototransistor 7 als Pfeil P dargestellt.

Durch das Drehen des Rotors 1, 2 entsteht in den Fototransistoren 7 eine Folge von Schaltimpulsen, die über Leitungen 9 zu einer Auswerteeinrichtung 10 geführt werden. Die Fototransistoren 7 sind um einen bestimmten Winkel gegeneinander versetzt angeordnet, so daß die bei der Drehung erzeugten Impulsreihen gegeneinander phasenverschoben sind. Die Auswerteeinrichtung 10 ermittelt in bekannter Weise aus den beiden erhaltenen Impulsreihen die Drehrichtung des Rotors 1, 2 und schaltet entweder eine Impulsreihe durch oder erzeugt eine neue, von den empfangenen Impulsen abhängige Impulsreihe. Eine derartige Impulsauswertung ist beispielsweise in der DE-A 30 15 971 näher beschrieben.

Zwischen der Drehachse D und dem Träger 5 ist eine Handhabe eines Druckschalters angeordnet. Die Handhabe besteht aus Handhabenoberteil 11 und Handhabenunterteil 12. Eine Schaltmatte 13 drückt die Handhabe 11, 12 in Ruhestellung (wie in Figur 2 dargestellt) soweit nach oben, bis Rastnasen 14 des Handhabenoberteils 11 gegen einen Anschlag 15 des Trägers 5 stoßen. Die Schaltmatte 13 weist Kontakte 17, 18, 19 auf. Durch Druck auf die Oberseite 16 der Handhabe 11, 12 werden die Kontakte 17 der Schaltmatte 13 auf die Kontakte 18, 19 gedrückt, so daß die Kontakte 18, 19 elektrisch leitend miteinander verbunden sind und so ein Tastschalter realisiert ist. Die Kontakte 18, 19 können aus dem Leitermaterial bei der Herstellung der Leitungen der Leiterplatte hergestellt sein, beispielsweise bei gedruckten Leiterpaltten gedruckt sein oder bei besonderen Anforderungen aus speziellem Kontaktmaterial hergestellt sein. Das Handhabenoberteil 11 und das Rotoroberteil 1 berühren sich nicht, auch nicht im Bereich 21. Der extra dicke Strich stellt hier dar, daß sich zwischen beiden vorgenannten Bauteilen ein schmaler Luftspalt befindet.

Sofern die Oberseite 16 der Handhabe 11, 12 aus lichtdurchlässigem Material besteht, kann eine Beleuchtungsvorrichtung, insbesondere eine Leuchtdiode 20 auf der Leiterplatte 6 zur Beleuchtung der Handhabe 11, 12 angeordnet werden, die in das nach unten offene Handhabenunterteil 12 ragt. Anstelle der Leuchtdiode 20 sind auch andere Beleuchtungsvorrichtungen wie z.B. Glühlampen oder Lichtleiter einsetzbar.

Eine Beleuchtung ist natürlich auch dann einsetzbar, wenn kein zusätzlicher Schalter innerhalb des Drehgebers angeordnet ist. Auch eine Beleuchtung des Drehgebers alleine läßt sich einfach realisieren, da genügend Bauraum zwischen der Drehachse D und dem Rotor 1, 2 vorhanden ist.

Die Handhabe 11, 12 ist durch den Druck gegen den Anschlag 15 weitestgehend gegen ein Verdrehen gesichert. Die Rippen 23 des Handhabenunterteils 12 können zusätzlich in nicht dargestellten Nuten des Trägers 5 derart geführt werden, daß nur noch eine axiale Bewegung der Handhabe 11, 12 möglich ist und damit ein Verdrehen der Handhabe 11, 12 verhindert wird.

Ein Rastprofil 24 ist auf dem äußeren Umfang des Rotorunterteils 2 angeformt, das mit Rastnocken 26 einer Rastschelle 25 zusammenwirkt und so beim Drehen des Rotors 1, 2 dem Bediener einen fühlbaren Widerstand vermittelt. Eine oder zwei Rastgabeln 27 der Rastschelle 25 ist bzw. sind von jeweils einem Indexstift 28 des Trägers 5 am Rotieren um die Drehachse D gehindert.

Ein Gehäusedeckel 29 ist fest mit dem Träger verbunden. Der Gehäusedeckel 29 bedeckt die Rastschelle 25 vollständig und mit einer umlaufenden Nase 30 das Rastprofil 24 des Rotorunterteils 2, so daß deren axiale Position festgelegt ist. Der Gehäusedeckel 29 kann wie dargestellt ein separates Bauteil sein, er kann aber auch in eine Geräteblende integriert sein, um die Bauteileanzahl zu reduzieren.

Das dargestellte Ausführungsbeispiel läßt sich vorteilhafterweise wie folgt zusammenfügen:

Zunächst wird das Handhabenoberteil 11 von oben in den Träger 5 eingeklipst, dann das Handhabenunterteil 12 von unten in das Handhabenoberteil 11 eingedrückt. Anschließend werden Rotoroberteil 1 und Rotorunterteil 2 zusammengeklipst und in den Träger 5 gesetzt, die Rastschelle 25 mit den Rastnasen 26 auf das Rastprofil 24 und mit der oder den Kupplungskabeln auf den oder die Indexstifte 28 gesetzt und mit dem Gehäusedeckel 29 abgedeckt.

Auf der Leiterplatte 6 werden die Fototransistoren 7, die Leuchtdioden 8, die Schaltmatte 13 und die Kontakte 17, 18, 19 montiert oder hergestellt. Schließlich wird der Träger so montiert, daß sich die Fototransistoren 7 und Leuchtdioden 8 in den Ausnehmungen 22 des Trägers 5 befinden und die Schaltmatte 13 die Handhabe 11, 12 nach oben drückt.

Um weitere Bauteile einsparen zu können, können beispielsweise der Rotor 1, 2 und die Handhabe 11, 12 jeweils einstückig ausgebildet sein. Dann ist die Konstruktion und Montage entsprechend anzupassen.

## Patentansprüche

1. Schaltungsanordnung mit einem Drehgeber, welcher einen Rotor (1,2) mit einer Handhabe (1) aufweist, bei dem durch Drehen der Handhabe (1) um eine Drehachse (D) mindestens eine von Drehgeschwindigkeit und Drehrichtung abhängige impulsfolge erzeugbar ist, wobei der Rotor (1,2) einen Bauraum begrenzt, in dem zusätzliche Bauteile (11-14, 16-20) montiert sind, wobei als ein zusätzliches Bauteil ein Druckschalter (11-14, 16-19) mit Schaltelement (13, 17-19) und Handhabe (11) vorhanden ist, der in axialer Richtung der Drehachse (D) betätigbar ist und wobei das Schaltelement (13, 17-19) des Druckschalters auf einer Leiterplatte (6) angeordnet ist und die Handhabe (11) des Druckschalters von einer Beleuchtungsvorrichtung beleuchtbar ist, wobei der Drehgeber auf der Leiterplatte (6) montiert ist und die Beleuchtungsvorrichtung (20) direkt auf der Leiterplatte (6) angeordnet ist, **dadurch gekennzeichnet, daß** das Schaltelement aus einer Schaltmatte (13) besteht, deren Kontakte (18, 19) auf der Leiterplatte (6) angeordnet und/oder ausgebüdet sind, wobei durch Druck auf die Oberseite (16) der Handhabe (11,12) Kontakte (17) der Schaltmatte (13) auf die Kontakte (18, 19) gedrückt werden, so daß die Kontakte (18, 19) elektrisch leitend miteinander verbunden sind und wobei in dem Drehgeber die Impulse optisch oder magnetisch erzeugt werden und der Rotor (1, 2) in einem Träger (5) um die Drehachse (D) drehbar gelagert ist, der auf seiner Unterseite mit der Leiterplatte (6) verbunden ist und wobei die Schaltmatte (13) die Handhabe (11, 12) in Ruhestellung so weit nach oben drückt, bis Rastnasen (14) der Handhabe des Druckschalters gegen einen Anschlag (15) des Trägers (5) stoßen.

2. Schaltungsanordnung nach einem der vorstehenden Ansprüche, **dadurch gekennzeichnet, daß** die Handhabe (16) des Druckschalters nicht drehbar ist.

3. Schaltungsanordnung nach einem der vorstehenden Ansprüche, **dadurch gekennzelchnet, daß** die Handhabe (16) des Druckschalters eine Beschriftung aufweist.

4. Schaltungsanordnung nach einem der vorhergehenden Ansprüche, **dadurch gekennzefichnet, daß** der Drehgeber einen Rotor (12) aufweist, der durch Drehung Lichtstrahlen (P) unterbricht oder mit Unterbrechungen reflektiert.

5. Schaltungsanordnung nach Anspruch 4, **dadurch gekennzeichnet, daß** eine Lichtquelle (8) und eine Lichtsenke (7) vorhanden sind, daß der Rotor (1, 2) in radialem Abstand von der Drehachse (D) Ausnehmungen (4) und dazwischenliegende Zähne (3) aufweist, daß das Licht durch die Ausnehmungen (4) auf die Lichtsenke (7) fällt und daß das Licht durch die Zähne (3) unterbrochen wird.

6. Schaltungsanordnung nach Anspruch 4, **dadurch gekennzeichnet, daß** der Rotor (1, 2) in radialem Abstand von der Drehachse (D) reflektierende Bereiche aufweist, die durch nicht reflektierende Bereiche unterbrochen werden, daß ein Lichtstrahl von der Lichtquelle zu den reflektierenden Bereichen gelangt und von dort zu der Lichtsenke reflektiert werden.

7. Schaltungsanordnung nach einem der Ansprüche 4 bis 6, **dadurch gekennzeichnet, daß** eine Leuchtdiode (8) als Lichtquelle ausgestaltet ist.

8. Schaltungsanordnung nach einem der Ansprüche 4 bis 7, **dadurch gekennzeichnet, daß** die Lichtsenke als Fototransistor (7) ausgestaltet ist.

9. Schaltungsanordnung nach einem der vorhergehenden Ansprüche 1 bis 3, **dadurch gekennzeichnet, daß** der Impulsgeber einen Rotor aufweist, an dessen Umfang Magnete angeordnet sind, die auf ortsfest angeordnete Spulen oder Hall-Sonden einwirken und so bei der Drehung des Rotors Impulse erzeugt werden.

10. Schaltungsanordnung nach einem der vorstehenden Anspruche, **dadurch gekennzeichnet, daß** der Impulsgeber einen Träger (5) aufweist, in dem der Rotor (1, 2) drehbar gelagert ist.

11. Schaltungsanordnung nach einem der vorstehenden Ansprüche, **dadurch gekennzeichnet, daß** der Rotor (1, 2) einen unteren Teil (2) mit den impulserzeugenden Mitteln und einen als Handhabe ausgebildeten oberen Teil (1) aufweist.

12. Schaltungsanordnung nach Anspruch 11, **dadurch gekennzeichnet, daß** der Rotor aus jeweils einem oberen Teil (1) und einem unteren Teil (2) zusammengefügt ist.

13. Schaltungsanordnung nach einem der Ansprüche 10 bis 12, wobei das zusätzliche Bauteil ein Druckschalter ist, **dadurch gekennzeichnet, daß** die Handhabe des Druckschalters und der Träger so ausgebildet sind, daß die Handhabe des Schalters derart in den Träger einklipsbar ist, daß die Handhabe (11, 12) in axialer Richtung zur Betätigung des Schalters bewegbar ist.

14. Schaltungsanordnung nach einem der Ansprüche10 bis 13, **dadurch gekennzeichnet, daß** der Rotor (12) des Drehgebers derart in den Träger (5) einklipsbar ist, daß er in axialer Richtung festliegt und nur um die Drehachse (D) gedreht werden kann.

15. Schaltungsanordnung nach einem der vorstehenden Anspruche, **dadurch gekennzeichnet, daß** der Drehgeber in Drehrichtung mehrere Raststeilungen einnehmen kann.

16. Schaltungsanordnung nach Anspruch 15, **dadurch gekennzeichnet, daß** der Rotor (1, 2) entlang seines Umfangs ein Rastprofil (24) aufweist.

17. Schaltungsanordnung nach Anspruch 16, **dadurch gekennzeichnet, daß** das Rastprofil (24) abgerundet ist.

18. Schaltungsanordnung nach Anspruch 16 oder 17, **dadurch gekennzeichnet, daß** ein oder mehrere Rastnocken (26) einer Rastschelle (25) mit dem Rastprofil zusammenwirken.

19. Schaltungsanordnung nach Anspruch 18, **dadurch gekennzeichnet, daß** die Rastschelle ein oder mehrere Kupplungsgabeln (27) aufweist, die jeweils von einem Indexstift in dem Träger geführt sind.

## Claims

1. Circuit arrangement having a rotary encoder, which has a rotor (1,2) with a handle (1), in which at least one pulse sequence which is dependent on the rotation rate and the rotation direction can be produced by rotation of the handle (1) about a rotation axis (D), with the rotor (1,2) bounding a space in which additional components (11-14, 16-20) are installed, a pressure-operated switch (11-14, 16-19) having a switching element (13,17-19) and a handle (11) being provided as an additional component, which pressure-operated switch can be actuated in the axial direction of the rotation axis (D), and the switching element (13,17-19) of the pressure-operated switch being arranged on a printed circuit board (6) and the handle (11) of the pressure-operated switch being able to be illuminated by an illumination apparatus, the rotary encoder being mounted on the printed circuit board (6) and the illumination apparatus (20) being arranged directly on the printed circuit board (6), **characterized in that** the switching element comprises a switching mat (13) whose contacts (18, 19) are arranged and/or formed on the printed circuit board (6), contacts (17) of the switching mat (13) being pressed onto the contacts (18, 19) by pressure on the top side (16) of the handle (11, 12), such that the contacts (18, 19) are electrically conductively connected to one another, and the pulses being produced optically or magnetically in the rotary encoder and the rotor (1, 2) being mounted such that it can rotate about the rotation axis (D) in a mount (5), which is connected to the printed circuit board (6) on its underside, and the switching mat (13) pressing the handle (11, 12) upwards in the rest position until latching tabs (14) on the handle of the pressure-operated switch strike a stop (15) on the mount (5).

2. Circuit arrangement according to the preceding claim, **characterized in that** the handle (16) of the pressure-operated switch cannot be rotated.

3. Circuit arrangement according to one of the preceding claims, **characterized in that** the handle (16) of the pressure-operated switch has an inscription.

4. Circuit arrangement according to one of the preceding claims, **characterized in that** the rotary encoder has a rotor (12) which, by rotation, interrupts light beams (P) or reflects them with interruptions.

5. Circuit arrangement according to Claim 4, **characterized in that** a light source (8) and a light sink (7) are provided, **in that** the rotor (1, 2) has recesses (4) and teeth (3) in between them at a radial distance from the rotation axis (D), **in that** the light passes through the recesses (4) to the light sink (7), and **in that** the light is interrupted by the teeth (3).

6. Circuit arrangement according to Claim 4, **characterized in that** the rotor (1,2) has reflective areas at a radial distance from the rotation axis (D), which are interrupted by nonreflective areas, **in that** a light beam from the light source reaches the reflective areas and is reflected from there to the light sink.

7. Circuit arrangement according to one of Claims 4 to 6, **characterized in that** a light-emitting diode (8) is used as the light source.

8. Circuit arrangement according to one of Claims 4 to 7, **characterized in that** the light sink is a phototransistor (7).

9. Circuit arrangement according to one of the preceding Claims 1 to 3, **characterized in that** the pulse transmitter has a rotor on whose circumference magnets are arranged which act on coils or hall probes arranged in fixed positions, so that pulses are produced during the rotation of the rotor.

10. Circuit arrangement according to one of the preceding claims, **characterized in that** the pulse transmitter has a mount (5) in which the rotor (1, 2) is mounted such that it can rotate.

11. Circuit arrangement according to one of the preceding claims, **characterized in that** the rotor (1, 2) has a lower part (2) with the pulse-producing means, and an upper part (1) in the form of a handle.

12. Circuit arrangement according to Claim 11, **characterized in that** the rotor is in each case assembled from an upper part (1) and a lower part (2).

13. Circuit arrangement according to one of Claims 10 to 12, with the additional component being a pressure-operated switch, **characterized in that** the handle of the pressure-operated switch and the mount are designed such that the handle of the switch can be clipped into the mount in such a way that the handle (11, 12) can be moved in the axial direction in order to operate the switch.

14. Circuit arrangement according to one of Claims 10 to 13, **characterized in that** the rotor (12) of the rotary encoder can be clipped into the mount (5) in such a way that it is fixed in the axial direction and can only be rotated about the rotation axis (D).

15. Circuit arrangement according to one of the preceding claims, **characterized in that** the rotary encoder can assume a number of latching positions in the rotation direction.

16. Circuit arrangement according to Claim 15, **characterized in that** the rotor (1, 2) has a latching profile (24) along its circumference.

17. Circuit arrangement according to Claim 16, **characterized in that** the latching profile (24) is rounded.

18. Circuit arrangement according to Claim 16 or 17, **characterized in that** one or more latching studs (26) on a latching clamp (25) interact with the latching profile.

19. Circuit arrangement according to Claim 18, **characterized in that** the latching clamp has one or more coupling forks (27), each of which is guided by an index pin in the mount.

## Revendications

1. Circuit comportant un encodeur rotatif qui a un rotor (1, 2) ayant une manette (1), dans lequel, en faisant tourner la manette (1) autour d'un axe de rotation (D), on peut produire au moins une séquence d'impulsions dépendant de la vitesse de rotation et du sens de la rotation, le rotor (1, 2) délimitant un espace de construction dans lequel sont montés des composants supplémentaires (11 à 14, 16 à 20), parmi lesquels se trouve, en tant que composant supplémentaire, un interrupteur à poussoir (11 à 14, 16 à 19) ayant un élément de commutation (13, 17 à 19) et une manette (11), lequel peut être actionné dans le sens axial de l'axe de rotation (D), l'élément de commutation (13, 17 à 19) de l'interrupteur à poussoir étant disposé sur une carte à circuits imprimés (6) et la manette (11) de l'interrupteur à poussoir pouvant être éclairée par un dispositif d'éclairage, l'encodeur rotatif étant monté sur la carte à circuits imprimés (6) et le dispositif d'éclairage (20) étant disposé directement sur la carte à circuits imprimés (6), **caractérisé par le fait que** l'élément de commutation est constitué d'un paillasson de commutation (13) dont les contacts (18, 19) sont disposées et/ou aménagés sur la carte à circuits imprimés (6), dans lequel, par la pression sur le côté (16) supérieur de la poignée (11, 12) des contacts (17) du paillasson (13) de commutation sont poussés sur les contacts (18, 19) de sorte que les contacts (18, 19) sont reliés entre eux d'une manière conductrice de l'électricité et dans lequel dans l'encodeur rotatif les impulsions sont produites de manière optique ou magnétique et le rotor (1, 2) est monté tournant autour de l'axe (D) de rotation dans un support qui est relié par son côté inférieur à la carte à circuit imprimé (6) et dans lequel le paillasson (13) de commutation repousse si loin vers le haut dans la position de repos la poignée (11, 12) que des becs (14) d'encliquetage de la poignée de l'interrupteur à poussoir viennent sur une butée (15) du support (15).

2. Circuit selon l'une des revendications précédentes **caractérisé par le fait que** la manette (16) de l'interrupteur à poussoir ne peut pas tourner.

3. Circuit selon l'une des revendications précédentes **caractérisé par le fait que** la manette (16) de l'interrupteur à poussoir porte une inscription.

4. Circuit selon l'une des revendications précédentes **caractérisé par le fait que** l'encodeur rotatif comporte un rotor (12) qui, en tournant, interrompt des rayons lumineux (P) ou les réfléchit avec des interruptions.

5. Circuit selon la revendication 4 **caractérisé par le fait qu'**il y a une source de lumière (8) et un puits de lumière (7), que le rotor (1, 2) a, à une certaine distance radiale de l'axe de rotation (D), des évidements (4) et, entre ceux-ci, des dents (3), que la lumière tombe, à travers les évidements (4), sur le puits de lumière (7) et que la lumière est interrompue par les dents (3).

6. Circuit selon la revendication 4 **caractérisé par le fait que** le rotor (1, 2) comporte, à une certaine distance radiale de l'axe de rotation (D), des zones réfléchissantes qui sont interrompues par des zones non réfléchissantes, qu'un rayon lumineux parvient de la source lumineuse aux zones réfléchissantes et, de là, sont réfléchies vers le puits de lumière.

7. Circuit selon l'une des revendications 4 à 6 **caractérisé par le fait qu'**une diode électroluminescente (8) est prévue comme source de lumière.

8. Circuit selon l'une des revendications 4 à 7 **caractérisé par le fait que** le puits de lumière est conçu en phototransistor (7).

9. Circuit selon l'une des revendications 1 à 3 **caractérisé par le fait que** l'encodeur rotatif comporte un rotor sur la circonférence duquel sont disposés des aimants qui agissent sur des bobines ou des sondes de Hall montées fixes et qu'ainsi, lors de la rotation du rotor, des impulsions sont produites.

10. Circuit selon l'une des revendications précédentes **caractérisé par le fait que** l'encodeur rotatif comporte un support (5) dans lequel le rotor (1, 2) est monté de telle manière qu'il puisse tourner.

11. Circuit selon l'une des revendications précédentes **caractérisé par le fait que** le rotor (1, 2) comporte une partie inférieure (2) ayant des moyens produisant des impulsions et une partie supérieure (1) constituée en manette.

12. Circuit selon la revendication 11 **caractérisé par le fait que** le rotor est assemblé à partir d'une partie supérieure (1) et d'une partie inférieure (2).

13. Circuit selon l'une des revendications 10 à 12, le composant supplémentaire étant un interrupteur à poussoir, **caractérisé par le fait que** la manette de l'interrupteur à poussoir et le support sont configurés de telle manière que la manette de l'interrupteur à poussoir peut être encliquetée dans le support de telle façon que la manette (11, 12) peut se déplacer dans le sens axial pour actionner l'interrupteur.

14. Circuit selon l'une des revendications 10 à 13 **caractérisé par le fait que** le rotor (12) de l'encodeur rotatif peut être encliqueté dans le support (5) de telle manière qu'il est fixe dans le sens radial et qu'il ne peut tourner qu'autour de l'axe de rotation (D).

15. Circuit selon l'une des revendications précédentes **caractérisé par le fait que** l'encodeur rotatif peut prendre, dans le sens de rotation, plusieurs positions d'encliquetage.

16. Circuit selon la revendication 15 **caractérisé par le fait que** le rotor (1, 2) comporte un profil d'encliquetage (24) le long de sa circonférence.

17. Circuit selon la revendication 16 **caractérisé par le fait que** le profil d'encliquetage (24) est arrondi.

18. Circuit selon la revendication 16 ou 17 **caractérisé par le fait qu'**une ou plusieurs cames d'arrêt (26) d'une bride d'arrêt (25) ont une action conjointe avec le profil d'encliquetage.

19. Circuit selon la revendication 18 **caractérisé par le fait que** la bride d'arrêt comporte un ou plusieurs étriers d'accouplement (27) qui sont chacun entraînés par une broche de repérage dans le support.
